# EUROPEAN PATENT APPLICATION

(11) **EP 4 631 707 A1**
(43) Date of publication of application: **15.10.2025**
(21) Application number: 24382374.7
(22) Date of filing: 10.04.2024
(51) Int. Cl.: B29D 99/00, B29C 70/30, B29C 70/44, B29C 70/48, B29C 65/48

(54) **METHOD OF MANUFACTURING A WIND TURBINE ROTOR BLADE, WIND TURBINE ROTOR BLADE AND TRANSITION PIECE**

(71) Applicant: Nordex Energy SE & Co. KG, 22419 Hamburg (DE); Nordex Energy Spain, S.A.U., 31395 Barasoain (Navarra) (ES)
(72) Inventor: Enger Aires, Gabriel Augusto, 31395 BARASOAIN (ES); Fabri, Patrick Roman, 22419 Hamburg (DE)
(74) Representative: Völkl Siebenson Patentanwälte - Partnerschaft mbB

(57) **Abstract**

The invention relates to a method of manufacturing a wind turbine rotor blade (110), the wind turbine rotor blade (110) having a first section (148) comprising a blunt trailing edge (142) and being located close to a rotor blade root region (114), a second section (150) comprising a sharp trailing edge (136) and being located in direction towards a rotor blade tip region (152) and a third section (154) being located between the first section (148) and the second section (150), wherein
- a transition piece (156) is arranged between two half shells (132) along the trailing edge (136) of the third section (154) firmly connecting both half shells (132),
- the transition piece (156) has a root-side end (162) and a tip-side end (164) and extends along a main extension direction (166) from the root-side end (162) to the tip-side end (164),
- the transition piece (156) has, along the main extension direction (166), a root-side section (168) being formed as a C-shaped bonding flange and a tip-side section (170) being formed as a monolithic wedge.

The invention also concerns a wind turbine rotor blade (110) and a transition piece (156).

## Description

The invention relates to a method of manufacturing a wind turbine rotor blade, and further to a wind turbine rotor blade and a transition piece.

Rotor blades of modern wind turbines have lengths of more than 60 meters. To manufacture them, typically two half-shells are first produced by many laminate layers of fiber composite material, into which support structures such as shear webs, spar caps or similar are inserted. The half-shells are then assembled and bonded together along their leading and trailing edges.

Many rotor blades utilize so-called flatback aerodynamic profiles with a blunt trailing edge in an area close to the blade root. In some cases, the blunt trailing edge is produced as a prefab and is inserted and bonded into the gap between the upper and lower half-shell in a separate process step. Alternatively, the blunt trailing edge can also be formed and manufactured together with a respective half-shell.

In both cases, there is a transition area between the area having a blunt trailing edge and an area having a sharp trailing edge, in which a bonding gap dimension is difficult to control. This results in very thick adhesive joints in the highly stressed transition area, which tend to suffer damage, e.g. cracking, during operation. To prevent this, for example, the transition area is laboriously laminated with thickening laminates in order to meet the adhesive gap requirements of no more than 10 to 30 mm.

To solve this problem inserts made of a core material wrapped with a laminate layer are known in the prior art. These inserts can be premanufactured and glued between the rotor blade half shells, alternatively such a prefab can be co-infused with either half-shell. Due to the core material, there is no possibility to control the bonding quality in this critical area by means of ultrasound, furthermore the core material is exposed to high shear loads, forming a potential weak spot

One task underlying the invention is to provide a concept for a wind turbine rotor blade with an improved structure in the area of the blunt trailing edge.

This object is solved by the independent claim. Advantageous embodiments are given in the sub-claims.

According to a first aspect a method of manufacturing a wind turbine rotor blade is disclosed. The wind turbine rotor blade has a first section comprising a blunt trailing edge and being located close to a rotor blade root region, a second section comprising a sharp trailing edge and being located in direction towards a rotor blade tip region and a third section being located between the first section and the second section. The method comprises the following steps:
- manufacturing a pressure-side half shell and a suction-side half shell,
- bonding together the pressure-side half shell and the suction-side half shell to form the wind turbine rotor blade, wherein
   -- a transition piece is arranged between the two half shells along the trailing edge of the third section firmly connecting both half shells,
   -- the transition piece has a root-side end and a tip-side end and extends along a main extension direction from the root-side end to the tip-side end,
   -- the transition piece has, along the main extension direction, a root-side section being formed as a C-shaped bonding flange and a tip-side section being formed as a monolithic wedge.

The inventive method contributes to avoiding the above-mentioned problems or disadvantages, respectively.

In particular, the transition piece, which is located between the two half shells, is specially designed to enable an undisturbed, secure, wear-resistant and continuous load transfer along the adhesive joint between the half shells of a wind turbine rotor blade having so called flatback airfoils. The transition piece comprises the C-shaped bonding flange and the solid tip part (wedge). The transition piece connects to the blunt trailing edge of the wind turbine rotor blade and bridges the gap between the half shells. The gap is running between the end of the blunt trailing edge panel and the location of the direct adhesive joint between the half shells. In other words, the transition piece is arranged in the transition area of the flatback airfoil (blunt trailing edge) to the standard airfoil profile (sharp trailing edge). The transition piece is configured to be located in an area with limited construction space and resulting manufacturing restrictions. The transition piece can be seen as a filler element, in particular as a rigid element. In the third section the transition piece forms the trailing edge having a shape of a blunt trailing edge changing into the shape of a sharp trailing edge in its main extension direction. The shape of the transition piece changes from a C-shaped section into a monolithic wedge shaped section. The monolithic wedge is made of a full material or a solid material.

The method and particularly the transition piece enables a constant adhesive joint thickness to be maintained in the transition area. The invention further provides structural advantages as the strength and mechanical characteristics of adhesive joints deteriorate with increasing thickness and thus must be kept in a tolerance band, e.g. ranging from 1-15mm. Furthermore, the invention also enables improved inspection of the adhesive bond line after manufacturing of the rotor blade to evaluate the quality of the adhesive joint, because the transition piece according to the invention eliminates the need for a filler material, in particular core elements made of foamed material. This means that ultrasonic methods can be used to reliably detect the quality of the adhesive bond.

According to an embodiment, the transition piece is made of a fiber composite material, in particular a glass fiber composite material. In particular, the transition piece comprises no core material and is not manufactured in a sandwich construction. Rather, the transition piece comprises a full laminate structure. This contributes to the above-mentioned functions and advantages.

According to an embodiment, the transition piece has an overall height extending from the pressure-side half shell to the suction-side half shell, and wherein the overall height decreases towards the tip-side end. Thus, the C-shaped bonding flange is reducing in thickness over its length. Since the C-shaped bonding flange cannot be reduced to a negligible thickness (0-1 mm) due to manufacturing limitations, the C-shaped bonding flange merges into the monolithic wedge, which mirrors the local thickness of the C-shaped bonding flange. This contributes to the above-mentioned functions and advantages.

According to an embodiment, a thickness of the wedge decreases towards the tip side end along the main extension direction. This contributes to the above-mentioned functions and advantages.

In order to reduce stiffness peaks created by the monolithic wedge part in surrounding thicker parts, e.g. on the root end, measures are required, as follows.

According to an embodiment, the root-side end of the wedge runs inclined with respect to the main extension direction. To ensure that at least in the main load direction (the wind turbine blade longitudinal direction corresponds to the main direction of the transition piece) peaks must be gradually distributed. For this purpose, the thicker root end of the wedge runs inclined (e.g. by cutting the end) at an angle, e.g. in a range between 10 and 60 degrees, preferably 30 or 45 degrees.

According to an embodiment, the root-side end and/or a longitudinal edge of the monolithic wedge comprises a chamfer. Thus, one or more chamfers are provided on the root side end and/or along the longitudinal edge of the wedge to mitigate stiffness peaks.

According to an embodiment, the C-shaped bonding flange partially overlaps the monolithic wedge. This provides a smooth load transfer from the C-shaped bonding flange to the (monolithic) wedge, preventing unwanted disturbances (steps) causing stiffness peaks.

According to an embodiment, the monolithic wedge comprises continuous filament or chopped strand mats. As already indicated above, the use of a suitable material is advantageous regarding the stiffness peaks. Such filament mats comprising chopped or continuous fiber reinforced plastics with a sufficiently low stiffness compared to oriented fiber reinforced plastics enable to mitigate stiffness peaks.

Due to a comparatively high thickness of the wedge part a lower stiffness material is used to mitigate the risk of a sudden stiffness change negatively impacting the structural behavior and damage tolerance. Suitable materials require sufficient tension, compression and shear strength to withstand the loading in the adhesive joint. As most core materials do not fulfil all these requirements, a fiber reinforced material with mechanical properties close to the structural adhesive is chosen. This also enables integral manufacturing with the C-shaped part made from glass fiber reinforced plastics. However, structural materials are not limited to fiber reinforced plastics but could also include thermoplastic, thermoset or sintered materials. The chosen material must feature a suitable resilience against crack initiation and propagation.

According to an embodiment, the transition piece is a prefabricated part, and wherein, in the step of bonding together, the prefabricated part is bonded in between the suction-side half shell and the pressure-side half shell by means of an adhesive. The prefabricated part is a fully cured part, and thus a stiff and rigid part. Thus, the prefabricated transition piece is bonded, i.e. glued, between the half shells after their production. The bond line between the transition piece and the suction side shell as well as the bond line between the transition piece and the pressure side shell can be inspected by means of ultrasound.

According to an embodiment, the transition piece is a prefabricated part, and wherein, in the step of manufacturing, the prefabricated part is included into the suction-side half-shell or the pressure-side half-shell by means of vacuum resin infusion.

For example, the method comprises the following sub-steps:
- providing a mold for one of the both half shells,
- placing a dry laminate layup into the mold, the dry laminate layup being configured to become the one half shell,
- placing the prefabricated part onto the dry laminate layup, and
- performing a vacuum resin infusion process, wherein the prefabricated part and the dry laminate layup are co-infused with resin and cured in order that the one half-shell is produced.

As an advantage, no secondary bond line between the transition piece and one of the half shells is necessary. This contributes to reduced bonding voids and a reduced risk of positioning errors, in particular positioning the transition piece out of tolerance.

According to an embodiment, the step of manufacturing comprises the following sub-steps:
- providing a mold for one of the both half shells,
- placing a first dry laminate layup into the mold, the first dry laminate layup being configured to become the one half shell,
- placing a second dry laminate layup onto the first dry laminate layup, the second dry laminate layup being configured to become the transition piece,
- performing a vacuum resin infusion process, wherein the first and second dry laminate layups are infused with resin and cured in order that the one half-shell is produced, wherein the transition piece is an integral part of the one half-shell.

Again, no secondary bond line between the transition piece and the half shell is necessary. This contributes to reduced bonding voids and a reduced risk of positioning errors, in particular positioning the transition piece out of tolerance.

According to an embodiment, a support element is provided being configured to hold the second dry laminate layup in place before the step of performing the vacuum resin infusion process, and wherein after curing, the support element is removed. The support element is for example made of silicone. The support element ensures that all components/elements of the transition piece, which are involved in the vacuum resin infusion process, are held in place, until the transition piece is finally cured.

According to a second aspect, a wind turbine rotor blade is disclosed, the wind turbine rotor blade having a blunt trailing edge, wherein the wind turbine rotor blade is manufactured by means of a method according to any one the above-described embodiments of the first aspect.

The second aspect enables the above-mentioned functions and advantages. With respect to the first aspect the above-described embodiments analogously apply to the wind turbine rotor blade.

According to a third aspect, a transition piece for a wind turbine rotor blade is disclosed. The transition piece is configured to be arranged between two half shells of the wind turbine rotor blade forming a trailing edge of the wind turbine rotor blade. The transition piece extends along a main extension direction from a root-side end to a tip-side end. The transition piece has a root-side section being formed as a C-shaped bonding flange and a tip-side section being formed as a monolithic wedge.

The wind transition piece enables the above-mentioned functions and advantages. The above-described embodiments with respect to the first and second aspect analogously apply to the transition piece.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a further schematic view of the rotor blade having a blunt trailing edge,
Figures 3 to 5 show stages of a method of manufacturing a wind turbine rotor blade with a transition piece according to an embodiment of the invention,
Figures 6 to 9 show different views of a transition piece according to an embodiment of the invention,
Figure 10 shows a perspective view of a wedge of a transition piece according to an embodiment of the invention,
Figures 11a,b to 13a,b refer to different methods of manufacturing a wind turbine rotor blade with a transition piece according to embodiments of the invention, and
Figure 14 shows a schematic flow diagram of a method according to an embodiment of the invention.

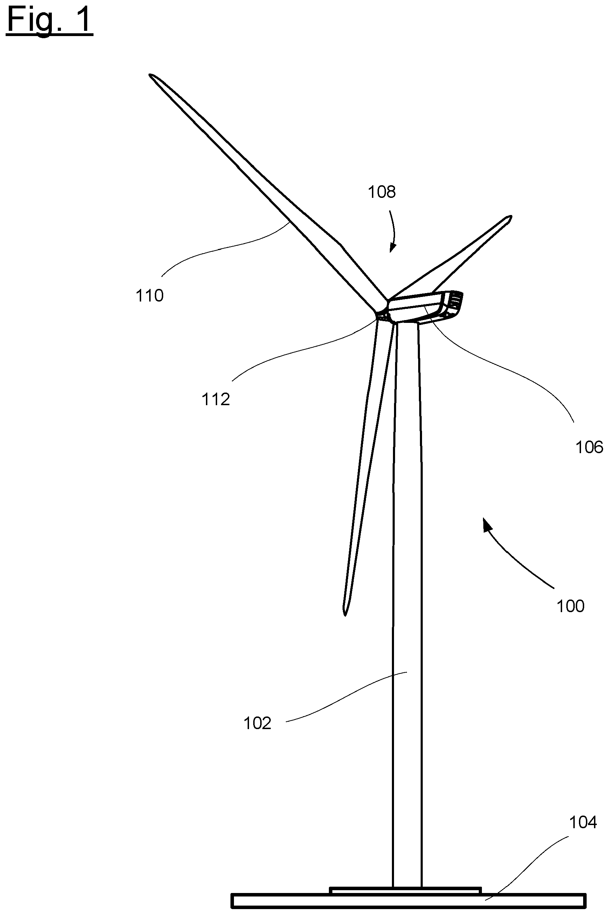

Figure 1 shows a schematic view of a wind turbine 100, which comprises a tower 102. The tower 102 is fixed to the ground by means of a foundation 104. A nacelle 106 is rotatably mounted at one end of the tower 102, opposite to the ground.

The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

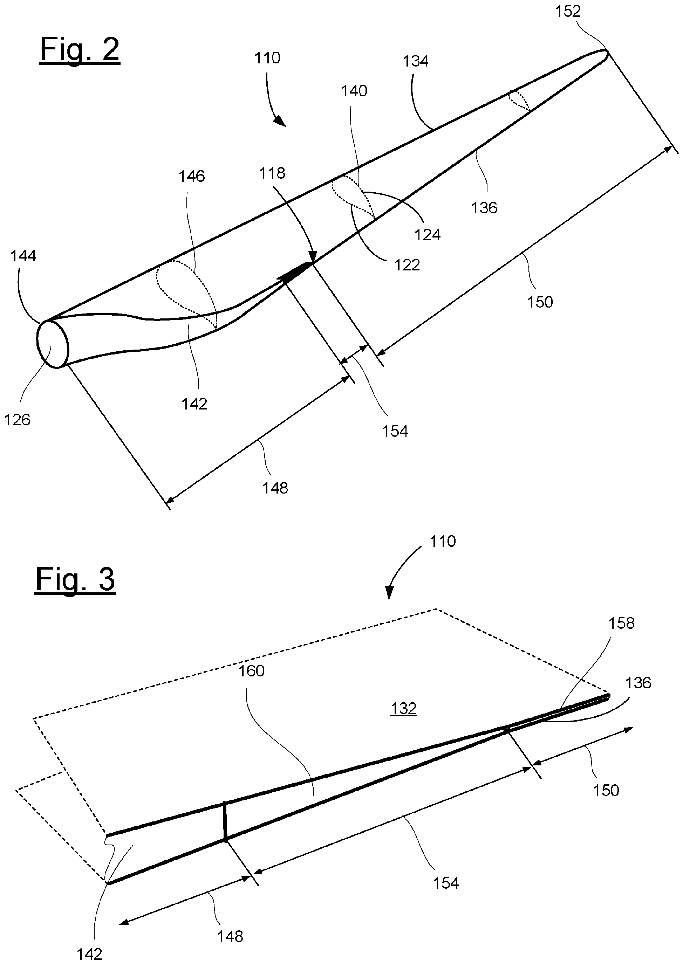

Figure 2 shows an exemplary rotor blade 110. The rotor blade 110 has a first section 148 comprising aerodynamic profiles having a blunt trailing edge and being located close to the rotor blade root end 126, a second section 150 comprising aerodynamic profiles having a sharp trailing edge and being located in direction towards a rotor blade tip 152, and a third section 154 being located between the first section 148 and the second section 150 and in which a transition piece 156 is arranged. Typically, the rotor blade 110 has a large number of aerodynamic cross-sectional profiles along its length, some of which are shown as cross-sectional shapes. The rotor blade 110 has a rotor blade tip 152 and a rotor blade root end 126 facing the rotor hub 112 and having an essentially circular cross-section. The rotor blade root end 126 is provided with a flange connection 128, by means of which the rotor blade 110 can be mechanically connected to a pitch bearing or an extender. The rotor blade 110 has a pressure side shell 122 and an opposite suction side shell 124 extending along a longitudinal direction 120 (also main extension direction). The two half-shells 122, 124 are firmly bonded to each other at opposite edges, namely the leading edge 134 and the trailing edge 136. The rotor blade 110 is essentially hollow inside. The rotor blade 110 can be a segmented rotor blade.

In the first section 148 the trailing edge 136 is cut off. Starting from a transition point 118, it merges into a blunt trailing edge 142, which widens further towards the blade root end 126 and finally merges into the circular (round) cross-section 144 of the rotor blade root end 126. In the first region 148 with the blunt trailing edge 142, a blunt aerodynamic cross-sectional profile 146 is shown which has a greater relative thickness than the aerodynamic cross-sectional profile 140 in the central region of the wind turbine rotor blade 110, the relative thickness being defined as the ratio of the thickness to the chord length of the aerodynamic profile.

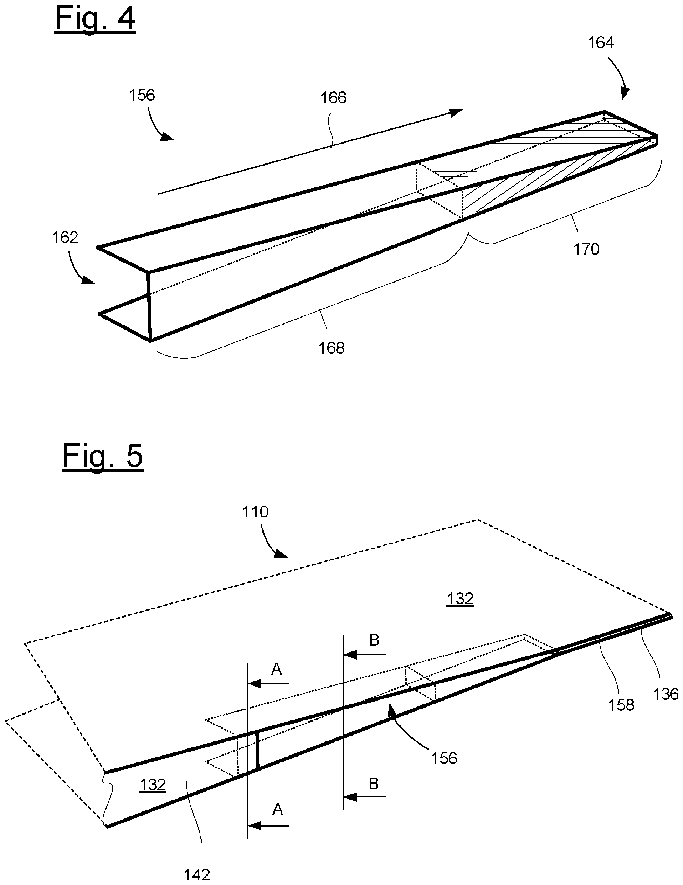

The transition piece 156 is arranged between the two half shells 132 along the trailing edge 132 of the third section 154 firmly connecting both half shells 132. It starts at the transition point 118 at which the aerodynamic profile of the rotor blade changes from profiles having a sharp trailing edge into profiles having a blunt trailing edge and runs in the direction to the rotor blade root. This is generally described in more detail with regard to figures 5 to 7.

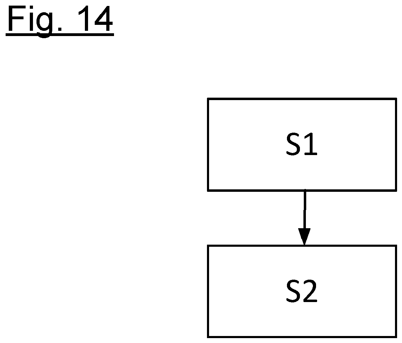

In the following, methods according to embodiments of the invention for manufacturing a wind turbine rotor blade 110 are described with the aid of figures 2 to 14, wherein figure 14 shows a schematic flow diagram.

In a first step S1, the pressure-side and suction-side half shells 132 are manufactured.

In a second step S2, both half shells 132 are bonded together, thereby forming the wind turbine rotor blade 110.

Figure 3 schematically shows portions of the suction-side and pressure-side half shells 132 at the trailing edge 136, wherein the first section 148, the second section 150 and the third section 154 are shown. In the second section 150, the half shells 132 are directly bonded together by an adhesive bond line 158. In the first section 148 a bunt trailing edge is included.

Due to the blunt trailing edge structure as described above, a distance between the half shells 132 at the trailing edge 136 increases towards the rotor blade root end 126. Within the gap 160, as shown in figure 3, the transition piece 156 is arranged to bridge the gap 160 between the half shells 122, 124.

Figure 4 schematically shows the transition piece 156. The transition piece 156 has a root-side end 162 and a tip-side end 164 and extends along a main extension direction 166 from the root-side end 162 to the tip-side end 164. The transition piece 156 has, along the main extension direction 166, a root-side section 168 being formed as a C-shaped bonding flange and a tip-side section 170 being formed as a monolithic wedge.

Figure 5 shows the state, in which the transition piece 156 is arranged between the half shells 132 in the third section 154. As can be seen, the transition piece 156 forms the blunt trailing edge 142 of the wind turbine rotor blade running out into a (nearly) sharp trailing edge at the tip-side end. The transition piece transfers the bonding from a glue flange bond in the first section to a direct bond in the second section.

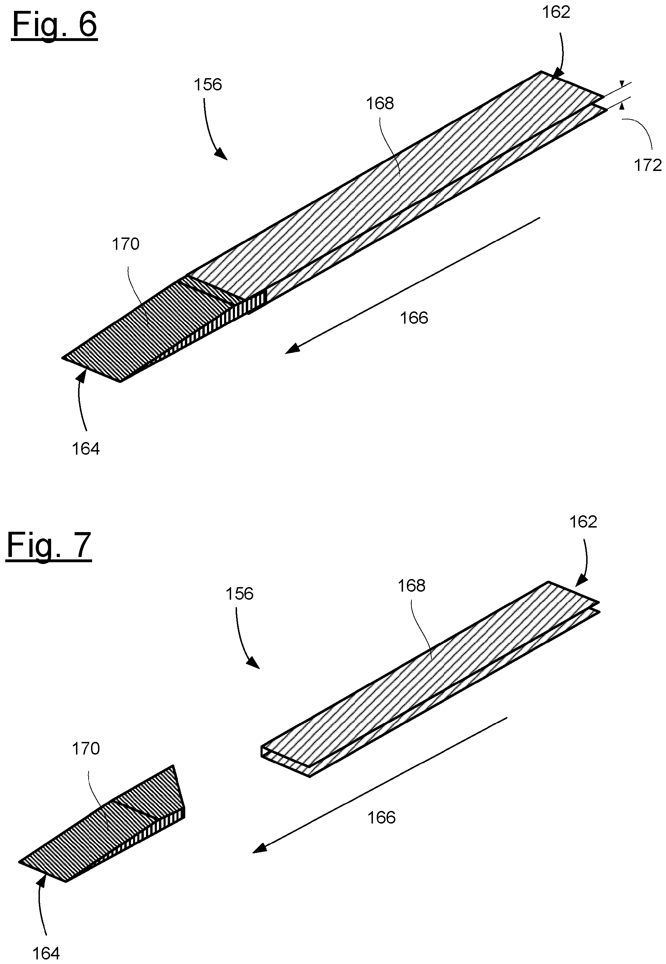

Figures 6 to 10 refer to a transition piece 156 according to an embodiment of the invention.

Figure 6 shows the transition piece 156 in its final manufactured state comprising the root side section 168 and the tip-side section 170. Figure 7 shows each section 168, 170 of the transition piece 156 as a single piece for better visibility. However, it is made clear that the transition piece 156 is made as one piece, i.e. is an integral part.

The transition piece 156 in the embodiment of figure 6 is a prefabricated part, and wherein, in the step of bonding together, the prefabricated part is bonded in between the suction-side half shell 124 and the pressure-side half shell 122 by means of an adhesive.

The transition piece 156 is made of a glass fiber composite material and therefore comprises a laminate structure. Thus, the transition piece 156 does not comprises any further, different material, like a core material, and is not manufactured as a sandwich structure.

The transition piece 156 has an overall height 172, the height 172 running vertical with respect to the main extension direction and, while arranged between the half shells 132, extending from the pressure-side half shell 122 to the suction-side half shell 124. The overall height 172 decreases towards the tip-side end 164.

The root-side section 168 is a C-shaped bonding flange and the tip-side section 170 is a monolithic wedge. The wedge is a full material body, which does not comprise any hollow space within. In the present embodiment, to precise the above said, the wedge comprises continuous filament mats. The transition piece 156 is manufactured such that the C-shaped bonding flange partially overlaps the wedge (see figure 6).

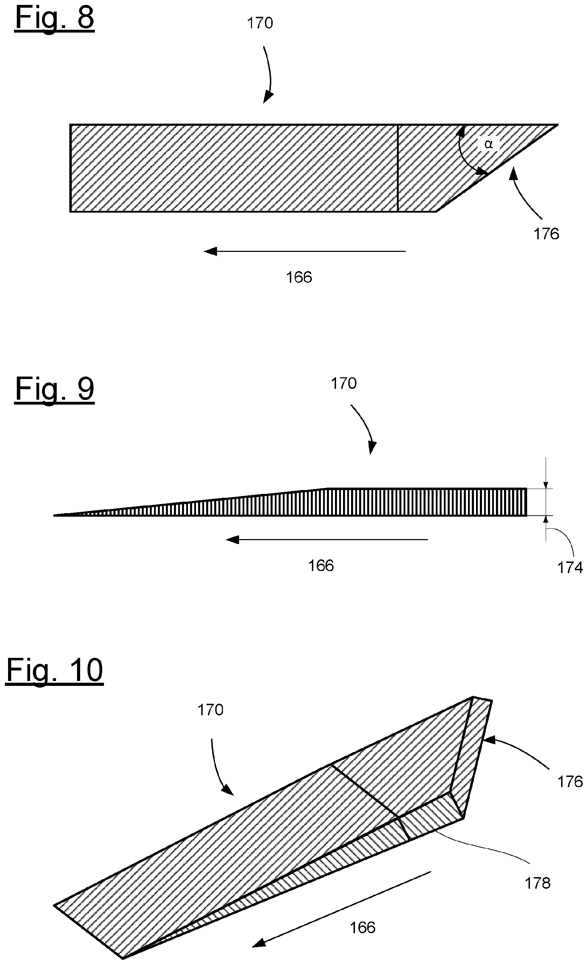

As can be seen from figure 8, the root-side end 176 of the wedge runs inclined with respect to the main extension direction 166. In other words, the root-side end 176 of the wedge is cut under an angle α. In the shown embodiment, the angle α is about 40 degrees with respect to the main direction 166.

As can be best seen from figure 9, the monolithic wedge (tip-side section 170) has a thickness 174 which decreases towards the tip side end 162 along the main extension direction 166. In other words, the wedge is chamfered.

Optionally, with respect to figure 10, the root-side end 176 of the wedge and a longitudinal edge 178 of the wedge comprise a chamfer 180.

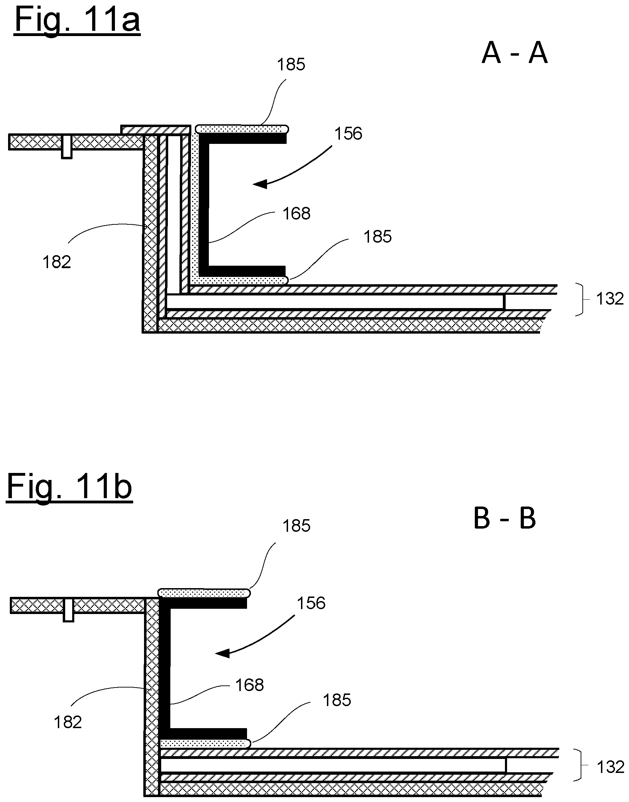

The manufacture of the transition piece 156 and its inclusion into the wind turbine rotor blade 110 can be done in different methods according to embodiments of the invention, which are detailed with respect to figures 11 to 13. In all figures a laminate lay-up in a mold in the region of the trailing edge is schematically shown.

With respect to figures 11a and 11b, a first variant of assembling the transition piece 156 is shown. Figure 11a shows a position according to position A-A in figure 5 with an overlap of the blunt trailing edge and the transition piece. Figure 11b shows a position according to position B-B in figure 5, where only the transition piece 156 forms the blunt trailing edge. The transition piece 156 is a prefabricated part and manufactured separately with respect to the half shell 132. In the step S2 as explained above, this prefabricated transition piece 156 is bonded to one of the half shells (suction-side half shell or the pressure-side half shell) by means of an adhesive 185. In other words, after the half shell infusion and curing process and thus manufacturing the half shells 132, the transition piece 156 is glued to a first half shell 132 and later in a step of closing the mold to the second half shell, means, in between the half shells 132 in the third section 154.

In figure 11a,b, one cured half shell 132 is shown, on which the transition piece 156 is arranged. In a first sub-step the transition piece 156 is bonded onto this half shell 132, wherein afterwards, the other half shell 132 (not shown) is placed onto the shown half shell 132 and bonded together with the transition piece 156 and the half shell 132.

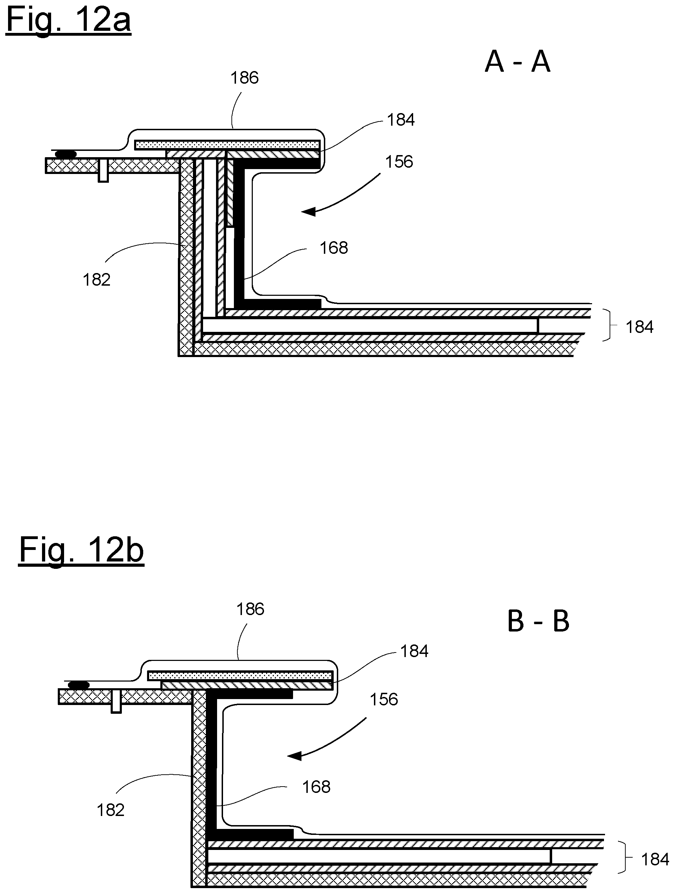

With respect to figures 12a and 12b, a second variant of assembling the transition piece 156 is shown. Figure 12a shows a position according to position A-A in figure 5 with an overlap of the blunt trailing edge and the transition piece. Figure 12b shows a position according to position B-B in figure 5, where only the transition piece 156 forms the blunt trailing edge. In the second variant, again the transition piece 156 is a prefabricated part as detailed above. However, in the step S2 of manufacturing, the prefabricated transition piece 156 is included into the first half-shell 132, e.g. the suction-side half-shell 124 or the pressure-side half-shell 122, by means of vacuum resin infusion and subsequent curing. Afterwards, the cured second half shell 132 is placed onto the first half shell 132 and bonded together with the transition piece 156 and the first half shell 132 to form the wind turbine rotor blade 110.

This method according to the second variant comprises, for example, the following sub-steps:
- providing a mold 182 for one of the half shells 132,
- placing a dry laminate layup 184 into the mold 182, the dry laminate layup 184 being configured to become the one half shell 132,
- placing the prefabricated transition piece 156 onto the dry laminate layup 184, and
- performing a vacuum resin infusion process by means of a vacuum device 186, wherein the prefabricated transition piece 156 and the dry laminate layup 184 are co-infused with resin and cured in order that the one half-shell 132 is produced.

For example, the vacuum device 186 comprises at least one vacuum pump, one or more hoses, etc. With such a setting, vacuum can be applied to the laminate layup 184 and the transition piece 156 for contributing to a high-quality bonding process, as is generally known to the person skilled in the art.

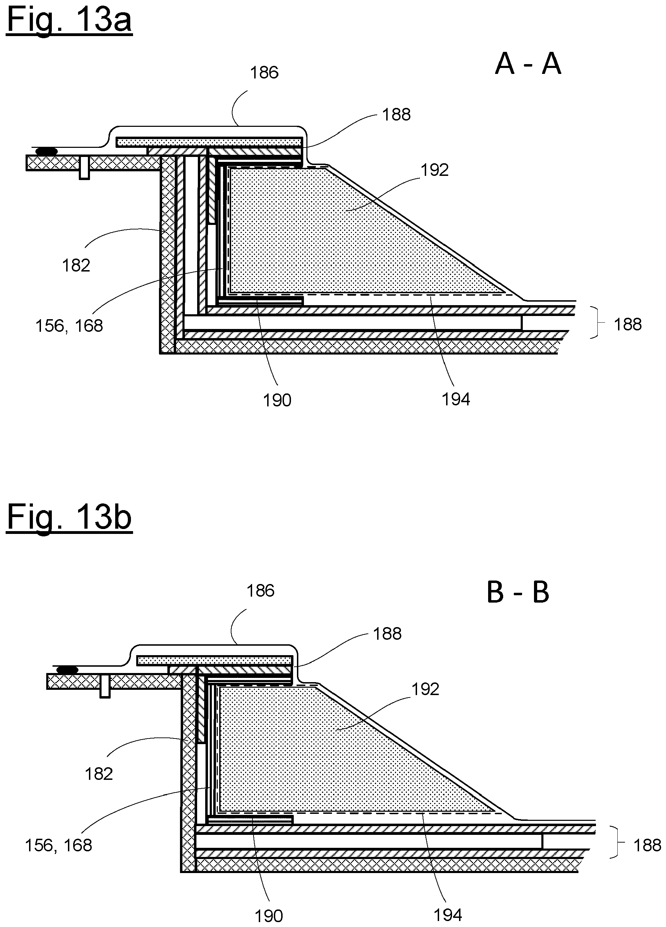

Figures 13a and 13b refer to a third variant of manufacturing the wind turbine rotor blade 110. Figure 13a shows a position according to position A-A in figure 5 with an overlap of the blunt trailing edge and the transition piece. Figure 13b shows a position according to position B-B in figure 5, where only the transition piece 156 forms the blunt trailing edge. In the third variant, the transition piece 156 is not provided as a prefabricated part but is manufactured together with one half shell 132. Thus, this variant features a dry laminate layup for both the one half shell 132 and the transition piece 156 and a co-infusion process of the transition piece 156 together with the half shell laminate layup.

In this third variant, the following sub-steps of the method are performed:
- providing a mold 182 for one of the both half shells 132,
- placing a first dry laminate layup 188 into the mold, the first dry laminate layup being configured to become the one half shell 132,
- placing a second dry laminate layup 190 onto the first dry laminate layup 188, the second dry laminate layup 190 being configured to become the transition piece 156,
- performing a vacuum resin infusion process, wherein the first and second dry laminate layups 188, 190 are infused with resin and cured in order that the one half-shell 132 is produced, wherein the transition piece 156 is an integral part of the one half-shell 132.

Again, a vacuum device 186 is used as indicated above.

In order to manufacture the transition piece 156, in particular the C-shaped bonding flange (root-side section 168), a support element 192 is provided being configured to hold the second dry laminate layup 190 in place before the step of performing the vacuum resin infusion process. After curing, the support element 192 is removed. The support element 192 is a silicon-based component in order to be able to easily remove it after the resin process. Optionally, a peel ply 194 could be provided to facilitate the removal of the support element 192.

In the schematic perspective view of figures 13a,b, the support element 192 is shown, being shaped as a wedge and placed within the to be formed C-shape bonding flange of the transition piece 156.

### Reference signs

- 100: wind turbine
- 102: tower
- 104: foundation
- 106: nacelle
- 108: rotor
- 110: rotor blade
- 112: rotor hub
- 118: transition point
- 120: longitudinal direction
- 122: pressure side shell
- 124: suction side shell
- 126: rotor blade root end
- 128: flange connection
- 130: shell
- 132: half-shell
- 134: leading edge
- 136: trailing edge
- 138: cross-section profile
- 140: aerodynamic cross-sectional profile
- 142: blunt trailing edge
- 144: circular cross-section
- 146: blunt aerodynamic cross-sectional profile
- 148: first section
- 150: second section
- 152: rotor blade tip
- 154: third section
- 156: transition piece
- 158: adhesive bond line
- 160: gap
- 162: root-side end
- 164: tip-side end
- 166: main extension direction
- 168: root-side section
- 170: tip-side section
- 172: height
- 174: thickness
- 176: root-side end of the tip-side section
- 178: longitudinal edge
- 180: chamfer
- 182: mold
- 184: dry laminate layup
- 185: adhesive
- 186: vacuum device
- 188: first dry laminate layup
- 190: second dry laminate layup
- 192: support element
- 194: peel ply
- α: angle
- S: step

## Claims

1. A method of manufacturing a wind turbine rotor blade (110), the wind turbine rotor blade (110) having a first section (148) comprising a blunt trailing edge (142) and being located close to a rotor blade root region (114), a second section (150) comprising a sharp trailing edge (136) and being located in direction towards a rotor blade tip region (152) and a third section (154) being located between the first section (148) and the second section (150), the method comprising the following steps:
- manufacturing a pressure-side half shell (132) and a suction-side half shell (132),
- bonding together the pressure-side half shell (132) and the suction-side half shell (132) to form the wind turbine rotor blade (110), wherein
-- a transition piece (156) is arranged between the two half shells (132) along the trailing edge (136) of the third section (154) firmly connecting both half shells (132),
-- the transition piece (156) has a root-side end (162) and a tip-side end (164) and extends along a main extension direction (166) from the root-side end (162) to the tip-side end (164),
-- the transition piece (156) has, along the main extension direction (166), a root-side section (168) being formed as a C-shaped bonding flange and a tip-side section (170) being formed as a monolithic wedge.

2. Method according to claim 1, wherein the transition piece (156) is made of a fiber composite material, in particular a glass fiber composite material.

3. Method according to claim 1 or 2, wherein the transition piece (156) has an overall height (172) extending from the pressure-side half shell (132) to the suction-side half shell (132), and wherein the overall height (172) decreases towards the tip-side end (164).

4. Method according to any one of the preceding claims, wherein a thickness (174) of the wedge decreases towards the tip side end (164) along the main extension direction (166).

5. Method according to any one of the preceding claims, wherein the root-side end (162) of the wedge runs inclined with respect to the main extension direction (166).

6. Method according to any one of the preceding claims, wherein the root-side end (162) and/or a longitudinal edge (178) of the wedge comprises a chamfer (180).

7. Method according to any one of the preceding claims, wherein the C-shaped bonding flange partially overlaps the wedge.

8. Method according to any one of the preceding claims, wherein the wedge comprises continuous filament mats.

9. Method according to any one of the preceding claims, wherein the transition piece (156) is a prefabricated part, and wherein, in the step of bonding together, the prefabricated part is bonded in between the suction-side half shell (132) and the pressure-side half shell (132) by means of an adhesive.

10. Method according to claims 1 to 8, wherein the transition piece (156) is a prefabricated part, and wherein, in the step of manufacturing, the prefabricated part is included into the suction-side half-shell (132) or the pressure-side half-shell (132) by means of vacuum resin infusion.

11. Method according to claims 1 to 8, wherein the step of manufacturing comprises the following sub-steps:
- providing a mold (182) for one of the both half shells (132),
- placing a first dry laminate layup (188) into the mold (182), the first dry laminate layup (188) being configured to become the one half shell (132),
- placing a second dry laminate layup (190) onto the first dry laminate layup (188), the second dry laminate layup (190) being configured to become the transition piece (156),
- performing a vacuum resin infusion process, wherein the first and second dry laminate layups (188, 190) are infused with resin and cured in order that the one half-shell (132) is produced, wherein the transition piece (156) is an integral part of the one half-shell (132).

12. Method according to claim 11, wherein a support element (192) is provided being configured to hold the second dry laminate layup (190) in place before the step of performing the vacuum resin infusion process, and wherein after curing, the support element (192) is removed.

13. A wind turbine rotor blade (110) having a blunt trailing edge (142), wherein the wind turbine rotor blade (110) is manufactured by means of a method according to any one of claims 1 to 12.

14. Transition piece (156) for a wind turbine rotor blade (110), the transition piece (156) being configured to be arranged between two half shells (132) of the wind turbine rotor blade (110) forming a trailing edge (136) of the wind turbine rotor blade (110), wherein
- the transition piece (156) extends along a main extension direction (166) from a root-side end (162) to a tip-side end (164), and
- the transition piece (156) has a root-side section (168) being formed as a C-shaped bonding flange and a tip-side section (170) being formed as a wedge.
